# EUROPÄISCHE PATENTSCHRIFT

(11) **EP 2 676 591 B1**
(45) Veröffentlichungstag und Bekanntmachung des Hinweises auf die Patenterteilung: **14.01.2015**
(21) Anmeldenummer: 13171303.4
(22) Anmeldetag: 10.06.2013
(51) Int. Cl.: A47L 9/00, B60B 33/00

(54) **Bodenstaubsauger mit wenigstens einer drehbar gelagerten Lenkrolleneinheit**
Floor vacuum cleaner with at least one castor with a rotatable bearing
Aspirateur de sol doté d'au moins une unité à roulettes rotative intégrée

(30) Priorität: 19.06.2012 EP 12004582
(43) Veröffentlichungstag der Anmeldung: 25.12.2013
(73) Patentinhaber: Robert Thomas Metall- und Elektrowerke GmbH & Co. KG, 57290 Neunkirchen (DE)
(72) Erfinder: Thomas, Paul-Gerhard, 57290 Neunkirchen (DE)
(74) Vertreter: Grosse, Wolf-Dietrich Rüdiger

(56) Entgegenhaltungen:
- WO-A1-90/04348
- DE-A1- 2 824 033
- DE-A1-102008 011 542
- KR-A- 20060 018 016

## Beschreibung

Die Erfindung betrifft einen Bodenstaubsauger mit wenigstens einer Lenkrolleneinheit, die ein Lenkrollengehäuse aufweist, welches mittels einer, gegenüber dem Unterteil des Gehäuses des Bodenstaubsaugers im Wesentlichen vertikal verlaufenden Achse, die in eine zylindrische Aufnahme des Unterteils eingerastet ist, drehbar gelagert ist, wobei in dem Lenkrollengehäuse mindestens ein Rad gelagert ist, das im Gebrauchszustand des Bodenstaubsaugers auf dem Boden aufliegt, und in Bewegungsrichtung des Bodenstaubsaugers hinter dem Drehpunkt der Achse angeordnet ist, und wobei in dem Lenkrollengehäuse der Lenkrolleneinheit mindestens ein zweites Rad in Bewegungsrichtung vor dem Rad angeordnet ist, dessen Lauffläche einen ersten Abstand zum Boden aufweist.

Benutzer ziehen häufig den Bodenstaubsauger während des Betriebes am Saugschlauch hinter sich her. Um eine gute Beweglichkeit zu gewährleisten, sind vorzugsweise die im vorderen Bereich angeordneten Laufräder in einer Lenkrolleneinheit angeordnet. Dabei weist die Lenkrolleneinheit selbst ein Lenkrollengehäuse auf, das um eine gegenüber dem unteren Gehäuseteil des Bodenstaubsaugers im Wesentlichen vertikal angeordnete Achse drehbar gelagert ist. Das Lenkrollengehäuse nimmt ein den Bodenkontakt vermittelndes Rad auf, das auf einer zum Boden im Wesentlichen parallel gehaltenen Achse gelagert ist. Das Lenkrollengehäuse ist vor dem Rad als Gleitkufe ausgebildet, damit auch kantige Hindernisse wie Türschwellen od. dgl. vom Bodenstaubsauger gleichermaßen gut und unabhängig von der Bodenbeschaffenheit und Eindringtiefe der Laufrolle in die zu saugende Bodenfläche ohne besondere Kraftanstrengung gleitend überwunden werden können. Solche mit Gleitkufen und Rad bzw. Laufrolle versehene Lenkrolleneinheiten sind beispielsweise aus der DE 28 24 033 A1 und der DE 10 2008 011 542 A1 bekannt, bei denen eine Laufrolle in einer drehbar gelagerten Gleitkufe gehalten ist.

Bei dem Ziehen über Hindernisse von geringer Höhe kommt es häufig zu einem Blockieren der Laufrollen, da diese aufgrund ihres geringen Durchmessers die Hindernisse nicht überfahren können. Insbesondere kommt es auf Hartböden beispielsweise vor, dass das Kabel des Bodenstaubsaugers selbst nicht überfahren werden kann, sondern von diesem Bodenstaubsauger vor sich hergeschoben wird.

Aus der KR 2006 0018016 A ist ein Bodenstaubsauger mit wenigstens einer Lenkrolleneinheit bekannt, die ein Lenkrollengehäuse aufweist, in dem mehrere Räder gelagert sind. Das Lenkrollengehäuse ist mit einer gegenüber dem Bodenstaubsauger im Wesentlichen vertikal verlaufenden Achse drehbar gelagert. Im Bereich des Lenkrollengehäuses hinter der Achse ist ein erstes Rad angeordnet, das im Gebrauchszustand des Bodenstaubsaugers auf dem Boden aufliegt. vor der Achse sind zwei weitere Räder vorgesehen, deren Laufflächen unterschiedliche Abstände zum Boden aufweisen. Diese vorderen Räder sollen das Überfahren eines Hindernisses geringer Höhe erleichtern.

Als nachteilig erweist sich hierbei jedoch, dass bedingt durch die Anordnung der weiteren Räder vor der vertikalen Achse des Lenkrollengehäuses dieses beim Auftreffen auf ein Hindernis umschlagen kann. Außerdem wird aufgrund der größeren Hebelwirkung die vertikale Achse stärker beansprucht.

In der WO 90/04348 A1 ist ein Bodenstaubsauger mit einer vorderen Lenkrolleneinheit mit einem gegenüber dem Staubsaugergehäuse drehbaren

Lenkrollenkörper beschrieben, das nur ein Laufrad und zwei in einem Winkel von nahezu 45° gegenüber dem Laufrad angeordnete Zwischenräder aufweist, wobei die Zwischenräder zur Abstützung des Lenkrollenkörper an dem Unterteil des Staubsaugergehäuses dienen, wodurch die Achse der Lenkrolleneinheit gegen Biegebeanspruchungen entlastet wird.

Die Erfindung geht von der Aufgabe aus, bei einem Bodenstaubsauger der eingangs genannten Art, das Überfahren von Hindernissen von geringer Höhe, beispielsweise Kabel, Teppichkanten oder Türschwellen, zu ermöglichen bzw. zu erleichtern, ohne dass die Gefahr besteht, dass die Lenkrolleneinheit umschlagen kann.

Die Aufgabe wird erfindungsgemäß für einen Bodenstaubsauger mit wenigstens einer drehbar gelagerten Lenkrolleneinheit der eingangs genannten Art durch die im Patentanspruch 1 angegebenen Merkmale gelöst. Vorteilhafte Ausbildungen sind in den abhängigen Patentansprüchen angegeben.

Bedeutsam ist dabei, dass das in Bewegungsrichtung vorderste Rad auf der Projektion des Drehpunkts der Achse bzw. zwischen der Projektion des Drehpunkts der Achse und dem Rad drehbar befestigt ist.

Dadurch wird erreicht, dass das zweite, in Bewegungsrichtung vorne liegende Rad, auf das Hindernis geringer Höhe so auftrifft, dass es um einen kleineren Winkel als das auf dem Boden aufliegende Rad gedreht werden muss, bis das Hindernis überwunden ist. Beim Überrollen des Hindernisses durch das zweite Rad, wird das auf dem Boden aufliegende Rad bereits angehoben, so dass auch dieses nur noch um einen kleineren Winkel gedreht werden muss um das Hindernis zu überwinden. Durch die Anordnung des in Bewegungsrichtung vordersten Rades unmittelbar unterhalb der vertikalen Achse des Lenkrollengehäuses bzw. zwischen der Projektion des Drehpunkts der Achse und dem ersten Rad wird verhindert, dass beim Auftreffen auf ein Hindernis das Lenkrollengehäuse umschlagen kann. Auch sind die auf die vertikale Achse und das Lenkrollengehäuse einwirkenden Kräfte geringer.

Es hat sich als vorteilhaft erwiesen, wenn in dem Lenkrollengehäuse der Lenkrolleneinheit ein weiteres Rad in Bewegungsrichtung zwischen den Rädern angeordnet ist, dessen Lauffläche einen zweiten, gegenüber dem ersten Abstand kleineren Abstand zum Boden aufweist.

Damit verfügt die Lenkrolleneinheit über eine Anzahl von hinter einander versetzt angeordneten Rädern oder Radpaaren, deren Abstand zum Boden derart variiert, dass das in Bewegungsrichtung vorderste Rad oder Radpaar am tiefsten Punkt den größten Abstand zum Boden aufweist. Die Abstände der in Bewegungsrichtung dahinter liegenden Räder oder Radpaare werden kontinuierlich reduziert, bis dass das hinterste Rad oder Radpaar den Boden berührt.

Erfindungsgemäß können die zusätzlichen Räder kleinere Durchmesser aufweisen.

In vorteilhafter Weise können die Räder in Bewegungsrichtung gegeneinander seitlich versetzt angeordnet sein und sich ihre äußeren Radien in der Ebene senkrecht zu ihren Achsen teilweise überlappen.

Dadurch wird erreicht, dass mehrere Räder mit verhältnismäßig großen Durchmessern auf kleinem Raum in Bewegungsrichtung hintereinander in dem Lenkrollengehäuse angeordnet werden können.

Vorzugsweise können das Anstiegsverhältnis der Abstände der Räder zum Boden sowie die Abstände der Räder zueinander im Wesentlichen gleich sein, so dass sich ein gradliniger Anstieg der Berührungspunkte der Räder ergibt.

Es hat sich als vorteilhaft erwiesen, wenn mindestens zwei in Bewegungsrichtung vor dem hintersten Rad liegende Räder paarweise in Bewegungsrichtung nebeneinander liegend angeordnet sind

In vorteilhafter Weise kann das Rad wenigstens teilweise radial umgreifend mit einer elastischen Auflage versehen sein und eine größte Breite als die übrigen Räder aufweisen.

Die Erfindung ist nachfolgend anhand von in der Zeichnung dargestellten Ausführungsbeispielen näher erläutert. Es zeigen:
- Figur 1: einen Bodenstaubsauger mit erfindungsgemäßen Lenkrolleneinheiten in einer Ansicht von unten,
- Figur 2: eine Lenkrolleneinheit gemäß Figur 1 in perspektivischer Einzeldarstellung von schräg unten und
- Figur 3: einen vorderen Teil des Bodenstaubsaugers mit einer auf dem Boden aufliegenden Lenkrolleneinheit gemäß Figur 1 im seitlichen Schnitt.

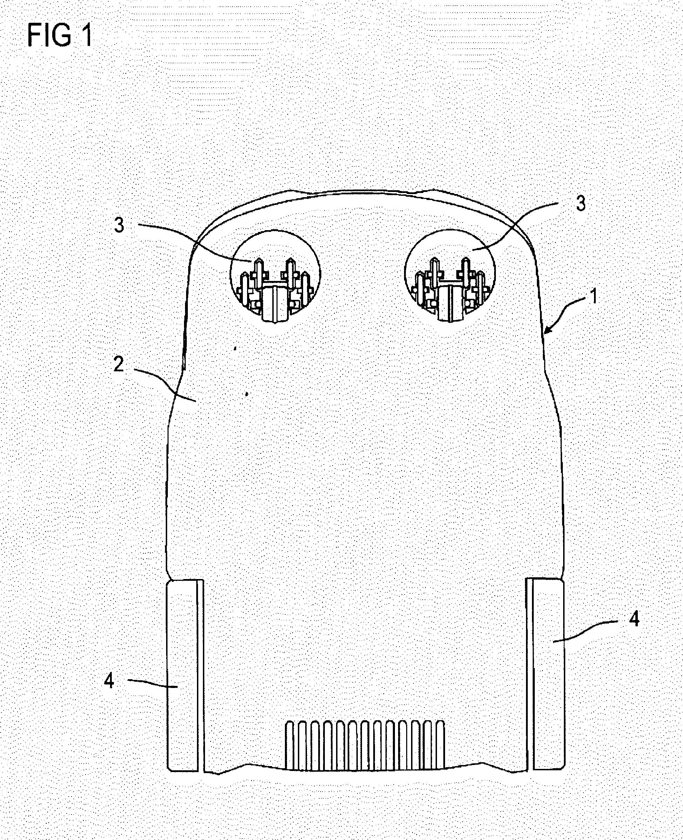

Die Figur 1 zeigt einen Bodenstaubsauger mit einem Gehäuse 1 von unten. Das Gehäuseunterteil 2 besteht aus einer Schale, die als Kunststoffspritzgussteil gefertigt ist. In dieses Gehäuseunterteil 2 sind im vorderen Bereich zwei Lenkrolleneinheiten 3 zusammen mit ihren vertikalen Achsen rastend in dafür vorgesehene zylinderförmige Ausnehmungen eingesteckt, wie dies nachfolgend noch näher beschrieben wird. Selbstverständlich kann der Bodenstaubsauger auch nur mit einer, dann vorzugsweise mittig im vorderen Bereich des Bodenstaubsaugers angeordneten Lenkrolleneinheit ausgestattet werden. Im hinteren Bereich des Gehäuseunterteils 2 sind seitlich zwei Laufräder 4 angebracht.

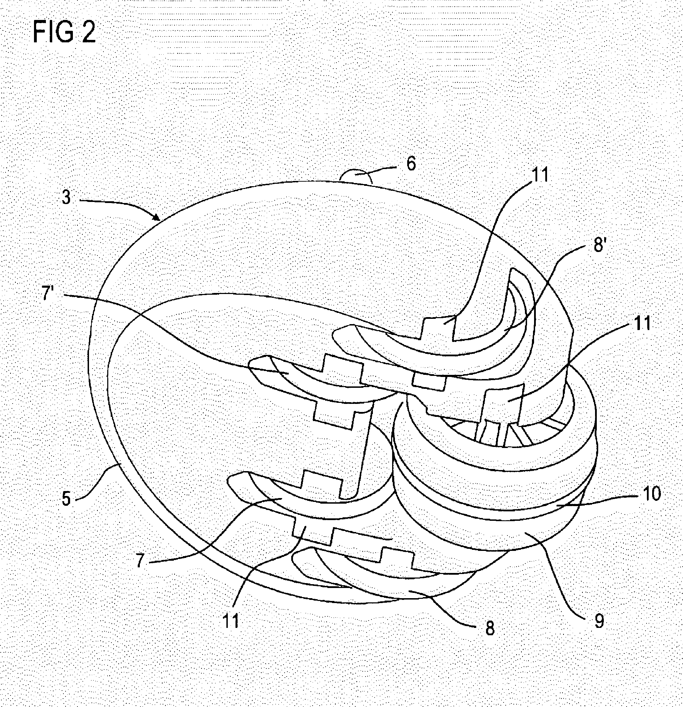

In der Figur 2 ist eine der Lenkrolleneinheiten 3 perspektivisch von schräg unten dargestellt, die aus einem Lenkrollengehäuse 5 besteht, an dessen Spitze die oben genannte vertikale Achse 6 hervorragt. Die Lenkrolleneinheit 3 weist mehrere versetzt angeordnete Räder 7 bis 9 sowie 7' und 8' auf, deren Durchmesser variieren, wie dies im Nachfolgenden noch näher erläutert wird. Die vordersten Räder 7, 7' sind im Bereich unterhalb der vertikalen Achse 6 des Lenkrollengehäuses 5 angeordnet. Sie sind auf der Projektion 16 des Drehpunkts der Achse 6 bzw. zwischen der Projektion 16 des Drehpunkts der Achse 6 und des Rades 9 an dem Lenkrollengehäuse 5 drehbar befestigt. Die vorderen kleineren weiteren Räder 7, 7' und die mittleren zweiten Räder 8, 8' sind schmal ausgeführt und jeweils paarweise beidseitig des hinteren Rades 9 angeordnet. Das hintere große Rad 9 ist in der Mitte angeordnet und breit ausgeführt. Es ist mit einer umlaufenden elastischen Auflage 10 versehen. Die mittleren zweiten Räder 8 und 8' sind mit etwas größerem Abstand derart seitlich des großen Rades 9 angeordnet, dass zwischen die zweiten Räder 8 und 8' sowie das Rad 9 die kleinen weiteren Räder 7 und 7' gelagert werden können, wobei sich die Laufflächen der kleinen weiteren Räder 7 und 7' sowie des Rades 9 durch ihre Abrundungen seitlich gerade nicht berühren, so dass sich ihre äußeren Radien in der Ebene senkrecht zu ihren Achsen teilweise überlappen.

Zur Lagerung im Lenkrollengehäuse 5 sind die Räder 7 bis 9 sowie 7' und 8' mit Achsen versehen, die in bekannter Weise von unten in schlitzförmige Achslager 11 des Lenkrollengehäuses 5 rastend eingesteckt werden. Dadurch wird die Montage erleichtert und auf einfache Weise eine sichere Befestigung erreicht.

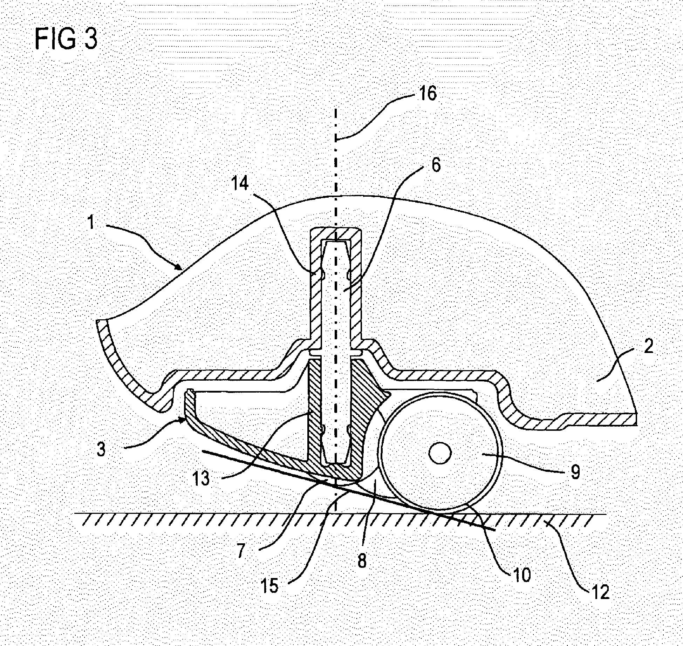

Die kleinen weiteren Räder 7 und 7', die mittleren zweiten Räder 8 und 8' und das große Rad 9 weisen derartige Durchmesser und Abstände auf, dass sich der Abstand der Räder 7 bis 8' zum Boden 12 in Lauf- bzw. Bewegungsrichtung langsam vergrößert, wie dies anhand der Figur 3 noch näher ersichtlich wird.

Die Figur 3 stellt einen vertikalen Schnitt durch das Lenkrollengehäuse 5 der auf dem Boden 12 laufenden Lenkrolleneinheit 3 sowie einen Teil des Gehäuses 1 des Bodenstaubsaugers dar. Die vertikale Achse 6 ist in eine zylindrische Aufnahme 13 in dem Lenkrollengehäuse 5 gehalten, mittels derer sie in eine in dem Unterboden 2 des Gehäuses 1 vorgesehene zylindrische Aufnahme 14 rastend eingesteckt wird, so dass die Lenkrolleneinheit 3 in dem Unterboden 2 des Bodenstaubsaugers drehbar gelagert ist.

In dieser Darstellung wird ersichtlich, dass die Abstände der Räder 7 bis 9 zum Boden 12 variieren. Während das große Rad 9 mit seiner Auflage 10 voll auf dem Boden 12 aufliegt, weisen die unmittelbar davor angeordneten mittleren, zweiten Räder 8 und 8' einen ersten Abstand und die vorderen, kleinen, weiteren Räder 7 und 7' einen zweiten Abstand auf. Diese Abstände können beispielsweise derart gewählt werden, dass der zweite Abstand doppelt so groß ist wie der erste Abstand. Anhand der Tangente 15 wird deutlich, dass die Abstände gleichmäßig ansteigen. Die Abstände können aber auch ungleichmäßig ansteigen, so dass die Tangente nicht alle Räder 7 bis 9 berührt.

Die unterschiedlichen Abstände können dadurch bewerkstelligt werden, dass die Durchmesser der Räder 7 bis 9 variieren und/oder dass die Räder 7 bis 9 in unterschiedlichen Höhen im Lenkrollengehäuse 5 gelagert sind.

Die erfindungsgemäßen Lenkrolleneinheiten 3 verfügen über eine Anzahl von hinter einander versetzt angeordneten Rädern 7 bis 9 sowie 7' und 8' oder Radpaaren, deren im Wesentlichen parallel verlaufenden Achsen in dem Lenkrollengehäuse 5 gelagert sind. Um das Überfahren von Kabeln, Teppichkanten und Schwellen zu erleichtern, wird der Abstand der versetzt angeordneten Räder 7 bis 9 sowie 7' und 8' zum Boden 12 derart variiert, dass das in Bewegungsrichtung zuvorderst liegende Rad 7 und 7' oder Radpaar an ihrem tiefsten Punkt den größten Abstand zum Boden 12 aufweist. Die Abstände der in Bewegungsrichtung dahinter liegenden Räder 8 bis 9 sowie 8' oder Radpaare werden sukzessiv verringert, so dass das in Bewegungsrichtung am weitesten hinten liegende Rad 9 oder Radpaar den Boden berührt. Durch die Anordnung des in Bewegungsrichtung vordersten Rades 7, 7' auf der Projektion 16 des Drehpunkts der Achse 6 im Bereich unmittelbar unterhalb der vertikalen Achse 6 des Lenkrollengehäuses 5 bzw. zwischen der Projektion 16 des Drehpunkts der Achse 6 und des Rades 9 wird verhindert, dass beim Auftreffen des in Bewegungsrichtung vordersten Rades 7, 7' auf ein Hindernis das Lenkrollengehäuse 5 umschlagen kann.

Durch die versetzte Anordnung der Räder 7 bis 9 sowie 7' und 8' werden Hindernisse, wie Elektrokabel, deren Außendurchmesser regelmäßig die Größe des zweiten Abstandes der weiteren Räder 7, 7' nur geringfügig übersteigen, entsprechen bei ihrem erstmaligen Kontakt mit einem der Räder 7 bis 9 sowie 7' und 8' zunächst im unteren Bereich des eingreifenden vorderen, weiteren Rades 7 oder 7' erfasst. Im weiteren Verlauf der Bewegung dreht sich das eingreifende weitere Rad 7 oder 7' in Fahrtrichtung und erniedrigt dadurch den Angriffspunkt des Hindernisses am nachfolgenden zweiten Rad 8 oder 8'. Hierbei zeigt es sich als vorteilhaft, wenn die Räder 7 bis 9 sowie 7' und 8' so eng hintereinander gesetzt sind, dass das jeweils nachfolgende Rad zum Eingriff kommt, wenn das vorausgehende Rad das Hindernis ungefähr an seinem tiefsten Punkt berührt.

### Bezugszeichenliste

- 1: Gehäuse
- 2: Gehäuseunterteil
- 3: Lenkrolleneinheit
- 4: Laufräder
- 5: Lenkrollengehäuse
- 6: vertikale Achse
- 7, 7': vordere Räder
- 8, 8': mittlere Räder
- 9: Rad
- 10: Auflage
- 11: schlitzförmige Achslager
- 12: Boden
- 13: zylindrische Aufnahme
- 14: zylindrische Aufnahme
- 15: Linie / Tangente
- 16: Projektion

## Patentansprüche

1. Bodenstaubsauger mit wenigstens einer Lenkrolleneinheit (3), die ein Lenkrollengehäuse (5) aufweist, welches mittels einer, gegenüber dem Unterteil (2) des Gehäuses des Bodenstaubsaugers im Wesentlichen vertikal verlaufenden Achse (6), die in eine zylindrische Aufnahme (13) des Unterteils (2) eingerastet ist, drehbar gelagert ist, wobei in dem Lenkrollengehäuse (5) mindestens ein Rad (9) gelagert ist, das im Gebrauchszustand des Bodenstaubsaugers auf dem Boden (12) aufliegt, und in Bewegungsrichtung des Bodenstaubsaugers hinter dem Drehpunkt der Achse (6) angeordnet ist, und wobei in dem Lenkrollengehäuse (5) der Lenkrolleneinheit (3) mindestens ein zweites Rad in Bewegungsrichtung vor dem Rad (9) angeordnet ist, dessen Lauffläche einen ersten Abstand zum Boden (12) aufweist,
**dadurch gekennzeichnet,**
**dass** das in Bewegungsrichtung vorderste Rad (7, 7') auf der Projektion (16) des Drehpunkts der Achse (6) bzw. zwischen der Projektion (16) des Drehpunkts der Achse (6) und dem Rad (9) drehbar befestigt ist.

2. Bodenstaubsauger nach Anspruch 1,
**dadurch gekennzeichnet,**
**dass** in dem Lenkrollengehäuse (5) der Lenkrolleneinheit (3) mindestens ein weiteres Rad (8, 8') in Bewegungsrichtung zwischen den Rädern (7, 7' und 9) angeordnet ist, dessen Lauffläche einen zweiten, gegenüber dem ersten Abstand kleineren Abstand zum Boden (12) aufweist.

3. Bodenstaubsauger nach Anspruch 1 oder 2,
**dadurch gekennzeichnet,**
**dass** die zusätzlichen Räder (7, 7', 8, 8') kleinere Durchmesser aufweisen.

4. Bodenstaubsauger nach einem der Ansprüche 1 bis 3,
**dadurch gekennzeichnet,**
**dass** die Räder (7 bis 9) zur Bewegungsrichtung gegeneinander seitlich versetzt angeordnet sind, und sich ihre äußeren Radien in der Ebene senkrecht zu ihren Achsen teilweise überlappen.

5. Bodenstaubsauger nach einem der Ansprüche 1 bis 4,
**dadurch gekennzeichnet,**
**dass** das Anstiegsverhältnis der Abstände der Räder (7 bis 9) zum Boden im Wesentlichen gleich ist, so dass sich ein gradliniger Anstieg der Berührungspunkte der Räder (7 bis 9) ergibt.

6. Bodenstaubsauger nach einem der Ansprüche 1 bis 5,
**dadurch gekennzeichnet,**
**dass** die Abstände der Räder (7 bis 9) zueinander im Wesentlichen gleich sind,

7. Bodenstaubsauger nach einem der Ansprüche 1 bis 6,
**dadurch gekennzeichnet,**
**dass** mindestens zwei in Bewegungsrichtung vor dem hintersten Rad (9) liegende Räder (7 bis 8') paarweise in Bewegungsrichtung nebeneinander liegend angeordnet sind

8. Bodenstaubsauger nach einem der Ansprüche 1 bis 7,
**dadurch gekennzeichnet,**
**dass** das Rad (9) wenigstens teilweise radial umgreifend mit einer elastischen Auflage (10) versehen ist.

9. Bodenstaubsauger nach einem der Ansprüche 1 bis 8,
**dadurch gekennzeichnet,**
**dass** das Rad (9) eine größte Breite als die Räder (7, 7', 8, 8') aufweist.

## Claims

1. A floor vacuum cleaner with at least one guide roller unit (3), which has a guide roller housing (5), which is rotatably mounted by means of an axis (6) running substantially vertically with respect to the lower part (2) of the housing of the floor vacuum cleaner, which axis is engaged into a cylindrical mount (13) of the lower part (2), wherein in the guide roller housing (5) at least one wheel (9) is mounted, which rests on the floor (12) in the state of use of the floor vacuum cleaner, and is arranged in the direction of movement of the floor vacuum cleaner behind the rotation point of the axis (6), and wherein in the guide roller housing (5) of the guide roller unit (3) at least a second wheel is arranged in the direction of movement in front of the wheel (9), the running surface of which has a first distance from the floor (12),
**characterized in**
**that** the foremost wheel (7, 7') in the direction of movement is rotatably fastened on the projection (16) of the rotation point of the axis (6) or respectively between the projection (16) of the rotation point of the axis (6) and the wheel (9).

2. The floor vacuum cleaner according to claim 1,
**characterized in**
**that** in the guide roller housing (5) of the guide roller unit (3) at least one further wheel (8, 8') is arranged in the direction of movement between the wheels (7, 7' and 9), the running surface of which has a second distance from the floor (12), which distance is smaller compared with the first distance.

3. The floor vacuum cleaner according to claim 1 or 2,
**characterized in**
**that** the additional wheels (7, 7', 8, 8') have smaller diameters.

4. The floor vacuum cleaner according to one of claims 1 to 3,
**characterized in that**
that the wheels (7 to 9) are arranged offset laterally with respect to one another to the direction of movement and their outer radii partially overlap one another in the plane perpendicularly to their axes.

5. The floor vacuum cleaner according to one of claims 1 to 4,
**characterized in**
**that** the rising ratio of the distances of the wheels (7 to 9) from the floor is substantially identical, so that a straight rise of the contact points of the wheels (7 to 9) is produced.

6. The floor vacuum cleaner according to one of claims 1 to 5,
**characterized in**
the distances of the wheels (7 to 9) to one another are substantially identical.

7. The floor vacuum cleaner according to one of claims 1 to 6,
**characterized in**
**that** at least two wheels (7 to 8'), lying in the direction of movement in front of the rearmost wheel (9) are arranged lying adjacent to one another in pairs in the direction of movement.

8. The floor vacuum cleaner according to one of claims 1 to 7,
**characterized in**
**that** the wheel (9) is provided in an at least partially radially encompassing manner with an elastic support (10).

9. The floor vacuum cleaner according to one of claims 1 to 8,
**characterized in**
**that** the wheel (9) has a greatest width than the wheels (7, 7', 8, 8').

## Revendications

1. Aspirateur de sol comprenant au moins une unité de roulettes directrices (3) qui présente un carter de roulettes directrices (5), lequel est positionné rotatif au moyen d'un axe (6) essentiellement vertical par rapport à la partie inférieure (2) du carter de l'aspirateur de sol, qui est encliqueté dans une réception cylindrique (13) de la partie inférieure (2), sachant qu'au moins une roue (9) est disposée dans le carter de roulettes directrices (5), qui repose sur le sol (12) lorsque l'aspirateur de sol est utilisé et est disposée derrière le pivot de l'axe (6) dans le sens de déplacement de l'aspirateur de sol, et sachant que dans le carter de roulettes directrices (5) de l'unité de roulettes directrices (3), au moins une second roue est disposée devant la roue (9) dans le sens de déplacement, dont la surface de roulement présente une première distance au sol (12),
**caractérisé en ce**
**que** la roue la plus avant (7, 7') dans le sens de déplacement est fixée rotative sur la projection (16) du pivot de l'axe (6), respectivement entre la projection (16) du pivot de l'axe (6) et la roue (9).

2. Aspirateur de sol selon la revendication 1,
**caractérisé en ce**
**qu'**au moins une roue supplémentaire (8, 8') est disposée dans le sens de déplacement entre les roues (7, 7' et 9) dans le carter de roulettes directrices (5) de l'unité de roulettes directrices (3), dont la surface de roulement présente une seconde distance au sol (12) inférieure par rapport à la première distance.

3. Aspirateur de sol selon la revendication 1 ou 2,
**caractérisé en ce**
**que** les roues supplémentaires (7, 7', 8, 8') présentent des diamètres inférieurs.

4. Aspirateur de sol selon l'une des revendications 1 à 3,
**caractérisé en ce**
**que** les roues (7 à 9) sont disposées décalées latéralement l'une contre l'autre par rapport au sens de déplacement, et leurs rayons extérieurs se chevauchent partiellement dans le plan vertical à leurs axes.

5. Aspirateur de sol selon l'une des revendications 1 à 4,
**caractérisé en ce**
**que** le rapport d'ascension des distances des roues (7 à 9) par rapport au sol est essentiellement égal, de sorte que cela produit une ascension en ligne droite des points de contact des roues (7 à 9).

6. Aspirateur de sol selon l'une des revendications 1 à 5,
**caractérisé en ce**
**que** les distances des roues (7 à 9) sont essentiellement égales entre elles.

7. Aspirateur de sol selon l'une des revendications 1 à 6,
**caractérisé en ce**
**qu'**au moins deux roues (7 à 8') placées devant la roue la plus arrière (9) dans le sens de déplacement, sont disposées par paires l'une à côté de l'autre dans le sens de déplacement.

8. Aspirateur de sol selon l'une des revendications 1 à 7,
**caractérisé en ce**
**que** la roue (9) est dotée au moins partiellement d'un revêtement élastique (10) sur un pourtour radial.

9. Aspirateur de sol selon l'une des revendications 1 à 8,
**caractérisé en ce**
**que** la roue (9) présente une largeur plus grande que les roues (7, 7', 8, 8').
